# EUROPÄISCHE PATENTSCHRIFT

(11) **EP 2 630 458 B1**
(45) Veröffentlichungstag und Bekanntmachung des Hinweises auf die Patenterteilung: **30.12.2015**
(21) Anmeldenummer: 11770812.3
(22) Anmeldetag: 20.10.2011
(51) Int. Cl.: G01K 3/14, G01K 7/18, G01K 13/02, G01K 7/42

(54) **TEMPERATURSENSORVORRICHTUNG**
TEMPERATURE SENSOR DEVICE
DISPOSITIF DE DÉTECTION DE TEMPÉRATURE

(30) Priorität: 21.10.2010 DE 102010049008
(43) Veröffentlichungstag der Anmeldung: 28.08.2013
(73) Patentinhaber: Continental Automotive GmbH, 30165 Hannover (DE)
(72) Erfinder: ANTE, Johannes, 93055 Regensburg (DE); GRASS, Philippe, 93053 Regensburg (DE); HERRMANN, Markus, 93051 Regensburg (DE); OTT, Andreas, 93128 Steinsberg (DE); REITMEIER, Willibald, 93155 Hohenschambach (DE); SCHÄDLICH, Denny, 08223 Neustadt (DE); WEIGL, Manfred, 93161 Sinzing / Viehhausen (DE); WILDGEN, Andreas, 93152 Nittendorf (DE)
(86) Internationale Anmeldenummer: PCT/EP2011/068348
(87) Internationale Veröffentlichungsnummer: WO 2012/052514

(56) Entgegenhaltungen:
- DE-A1- 19 810 674
- DE-A1-102007 058 833
- GB-A- 2 120 453

## Beschreibung

Die Erfindung betrifft eine Temperatursensorvorrichtung.

Zunehmend strengere gesetzliche Vorschriften erfordern eine Reduzierung der von einem Kraftfahrzeug ausgehenden Verbrennungsabgase. In diesem Zusammenhang werden Kraftfahrzeuge zunehmend mit Abgasreinigungsanlagen ausgestattet. Solche Abgasreinigungsanlagen werden während des Fahrbetriebs überwacht. Eine Zustandsgröße, die für eine Überwachung und/oder Steuerung der Abgasreinigungsanlage genutzt wird, ist beispielsweise die Abgastemperatur.

DE 10 2007 058 833 A1 offenbart eine Heizeinrichtung für eine Waschmaschine. Die Heizeinrichtung weist einen Träger auf und drei darauf angeordnete flächige Heizelemente. Die Heizelemente sind als Dickschichtheizung flächig auf den Träger aufgebracht, wobei dieser rinnenartig ausgebildet ist. Die Heizeinrichtung weist zwei Temperatursensoren auf, die an der Außenseite des Trägers vorgesehen sind, wobei vorzugsweise ein Temperatursensor nahe dem einem Ende des Trägers und der andere Temperatursensor nahe an dem anderen Ende im Längsverlauf parallel zur Vertiefung vorgesehen sind.

GB 2 120 453 A offenbart einen Temperatursensor für ein Anemometer. Der Temperatursensor weist ein keramisches Substrat auf. Der Temperatursensor weist zwei temperatursensible Widerstandselemente auf, die eine Widerstandschicht umfassen. Zwischen den Widerstandselementen ist eine Öffnung durch das Substrat angeordnet.

Die Aufgabe, die der Erfindung zugrunde liegt, ist, eine Temperatursensorvorrichtung zu schaffen, die ein präzises Ermitteln einer Gastemperatur ermöglicht.

Die Aufgabe wird gelöst durch die Merkmale des unabhängigen Patentanspruchs. Vorteilhafte Ausgestaltungen der Erfindung sind in den Unteransprüchen gekennzeichnet.

Gemäß einem ersten Aspekt zeichnet sich die Erfindung aus durch eine Temperatursensorvorrichtung, die ein Trägersubstrat sowie eine erste und eine zweite Temperaturmessstruktur aufweist. Das Trägersubstrat weist einen ersten Bereich und einen zweiten Bereich auf, wobei der erste Bereich beim Betrieb der Temperatursensorvorrichtung einem Gasstrom ausgesetzt ist und der zweite Bereich zu dem ersten Bereich in axialer Richtung entlang einer Längsachse des Trägersubstrats vorgegeben beabstandet ist. Die erste Temperaturmessstruktur ist in dem ersten Bereich angeordnet. Die zweite Temperaturmessstruktur ist in dem zweiten Bereich angeordnet. Der erste Bereich repräsentiert einen ersten Endbereich des Trägersubstrats und der zweite Bereich einen zweiten Endbereich des Trägersubstrats. Das Trägersubstrat weist einen keramischen Werkstoff auf.

Der Gasstrom kann in einem Abgasstrang einer Brennkraftmaschine strömen. Die erste Temperaturmessstruktur und die zweite Temperaturmessstruktur ermöglichen, dass mehrere Messgrößen erfasst werden können, die für ein präzises Ermitteln einer Gastemperatur des Gasstroms genutzt werden können, vorzugsweise zum Ermitteln einer Abgastemperatur eines Abgases in dem Abgasstrang. Hierbei ermöglicht ein Messen und Auswerten eines temperaturabhängigen Widerstandes der ersten und zweiten Temperaturmessstruktur ein Ermitteln der Gastemperatur des Gases. Die erfassten Messgrößen und/oder daraus abgeleitete Zustandsgrößen des Gasstroms können für verschiedene Anwendungen, beispielsweise für ein oder mehrere Steuer- oder Regelungsprozesse der Brennkraftmaschine genutzt werden. Es kann eine erste Sensortemperatur im Bereich der ersten Temperaturmessstruktur und eine zweite Sensortemperatur im Bereich der zweiten Temperaturmessstruktur erfasst werden. Abhängig von der ersten Sensortemperatur und der zweiten Sensortemperatur kann die Gastemperatur des Gases sehr präzise ermittelt werden. Eine mögliche thermische Anbindung des Trägersubstrats an Komponenten, die nicht die Gastemperatur aufweisen, kann dazu führen, dass sich die erste und/oder die zweite Sensortemperatur von der Gastemperatur unterscheiden. Beispielsweise ist das Trägersubstrat in einem Gehäuse angeordnet, das an einem Abgasrohr angebracht ist, wodurch eine thermische Kopplung mit dem Abgasrohr entstehen kann. Eine Fahrgeschwindigkeit sowie eine Umgebungstemperatur können so eine Temperatur der Temperaturmessvorrichtung beeinflussen. Ein Erfassen der ersten Sensortemperatur und der zweiten Sensortemperatur ermöglicht, dass die Gastemperatur abhängig von der ersten Sensortemperatur und der zweiten Sensortemperatur einfach ermittelt werden kann, beispielsweise unabhängig von einem Wärmefluss von dem Trägersubstrat an das Abgasrohr. Dies ist besonders vorteilhaft, da der Wärmefluss von einer Umgebungstemperatur und einer Fahrgeschwindigkeit sowie fahrzeugspezifischen baulichen Gegebenheiten abhängen kann. Eine thermische Entkopplung zwischen der Temperatursensorvorrichtung und dem Gehäuse und/oder Kontaktieren ist somit nicht erforderlich.

Die Temperatursensorvorrichtung kann auch derart ausgebildet und angeordnet sein, dass beim Betrieb der Temperatursensorvorrichtung auch der zweite Bereich zumindest teilweise dem Gasstrom ausgesetzt sein kann. Die Beabstandung zwischen dem ersten Bereich und dem zweiten Bereich kann vorgebbar sein, beispielsweise abhängig von einer gewünschten Anordnung der Temperatursensorvorrichtung in dem Abgasstrang einer Brennkraftmaschine und/oder abhängig von einer vorgegebenen minimalen Temperaturdifferenz zwischen der ersten Sensortemperatur und der zweiten Sensortemperatur bei einer vorgegebenen Gastemperatur. Das Trägersubstrat kann zusätzlich für elektrische Verbindungen genutzt werden, die bis in einen kälteren Bereich außerhalb des Abgasstrangs reichen. In diesem kälteren Bereich kann von einer Leitungsführung auf dem Trägersubstrat auf eine Kunststoff isolierende Kabelführung übergegangen werden. Die Gastemperatur kann insbesondere auch dann präzise ermittelt werden, wenn die erste Sensortemperatur und die zweite Sensortemperatur jeweils eine geringere Temperatur aufweisen als die Gastemperatur. Dadurch können Anforderungen an die Hochtemperaturfestigkeit der Temperatursensorvorrichtung reduziert werden.

Die Anordnung der ersten Temperaturmessstruktur in dem ersten Endbereich des Trägersubstrats und der zweiten Temperaturmessstruktur in dem zweiten Endbereich des Trägersubstrats ermöglicht eine kostengünstige Herstellung.

Das Trägersubstrat kann im Wesentlichen den keramischen Werkstoff aufweisen, insbesondere aus dem keramischen Werkstoff bestehen. Der keramische Werkstoff weist vorteilhafterweise eine hohe elektrische Isolation und gleichzeitig eine hohe thermische Leitfähigkeit auf. Vorteilhafterweise kann aufgrund der hohen thermischen Leitfähigkeit die Temperatursensorvorrichtung eine hohe Ansprechgeschwindigkeit aufweisen bezüglich einer Temperaturänderung. Dies kann einen Beitrag leisten dazu, dass eine zu messende Temperatur und/oder eine Änderung einer Temperatur sehr präzise erfasst werden kann. Der keramische Werkstoff kann als Aluminiumoxid (Al₂O₃) ausgebildet sein.

In einer vorteilhaften Ausgestaltung ist die Temperaturmessstruktur über Zuleitungen mit Anschlusskontakten verbunden, die in dem zweiten Bereich angeordnet sind. Auch die zweite Temperaturmessstruktur kann über Zuleitungen mit weiteren Anschlusskontakten verbunden sein, die vorzugsweise in dem zweiten Bereich des Trägersubstrats angeordnet sind.

In einer weiteren vorteilhaften Ausgestaltung weisen die erste Temperaturmessstruktur und/oder die zweite Temperaturmessstruktur eine Platinlegierung auf. Die erste und zweite Temperaturmessstruktur können im Wesentlichen die Platinlegierung aufweisen, insbesondere aus der Platinlegierung bestehen. Dies kann einen Beitrag leisten dazu, dass die erste und/oder die zweite Temperaturmessstruktur eine hohe Beständigkeit gegenüber hohen Temperaturen oder mechanischen und/oder chemischen Belastungen aufweist.

In einer weiteren vorteilhaften Ausgestaltung sind die erste Temperaturmessstruktur und die zweite Temperaturmessstruktur sowie die jeweiligen Zuleitungen in einer ersten Substratebene ausgebildet und weisen eine metallische Legierung auf. Dies ermöglicht eine günstige Herstellung der Temperatursensorvorrichtung, da so sämtliche metallische Strukturen der ersten Substratebene in einem Arbeitsschritt aufgebracht werden können, beispielsweise mittels eines Siebdrucks. Die metallische Legierung kann als Platinlegierung ausgebildet sein. Beispielsweise kann vorgesehen sein, dass die erste Temperaturmessstruktur und die zweite Temperaturmessstruktur sowie die jeweiligen Zuleitungen auf einer ersten Oberfläche des Trägersubstrats, angeordnet sind. Alternativ ist auch möglich, dass die erste Temperaturmessstruktur in einer ersten Substratebene des Trägersubstrats angeordnet ist und die zweite Temperaturmessstruktur in einer zweiten Substratebene, z. B. auf einer zweiten Oberfläche des Trägersubstrats. Diese erste und zweite Substratebene können näherungsweise parallel verlaufen und einen orthogonalen zu der Längsachse verlaufenden vorgegebenen Abstand aufweisen.

Ausführungsbeispiele der Erfindung sind im Folgenden anhand der schematischen Zeichnungen näher erläutert. Es zeigen:
- Figur 1: eine Temperatursensorvorrichtung und
- Figur 2: ein Temperaturmessmodul.

Elemente gleicher Konstruktion oder Funktion sind figurenübergreifend mit den gleichen Bezugszeichen versehen.

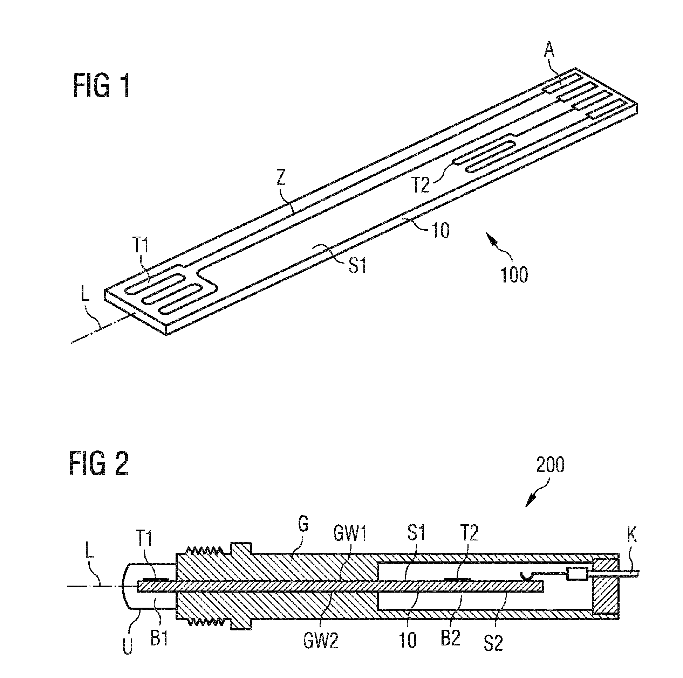

Figur 1 zeigt eine Temperatursensorvorrichtung 100. Die Temperatursensorvorrichtung 100 kann beispielsweise in einem Abgasstrang einer Brennkraftmaschine eines Kraftfahrzeugs angeordnet sein. Während eines Betriebs der Brennkraftmaschine kann in dem Abgasstrang ein Gas, insbesondere ein Abgas, strömen.

Die Temperatursensorvorrichtung 100 weist ein Trägersubstrat 10 auf. Das Trägersubstrat 10 kann aus einem keramischen Werkstoff bestehen oder zumindest einen keramischen Werkstoff aufweisen, beispielsweise Aluminiumoxid (Al₂O₃).

Die Temperatursensorvorrichtung 100 weist eine erste Temperaturmessstruktur T1 und eine zweite Temperaturmessstruktur T2 auf. Die erste T1 und zweite Temperaturmessstruktur T2 weisen beispielsweise jeweils eine mäanderförmige Leiterbahnführung auf. Die erste Temperaturmessstruktur T1 ist beispielsweise in einem ersten Bereich B1 des Trägersubstrats 10 angeordnet, wobei der erste Bereich B1 des Trägersubstrats 10 beispielsweise einen Bereich des Trägersubstrats 10 repräsentiert, der beim Betrieb der Temperatursensorvorrichtung 100 einem Gasstrom ausgesetzt ist.

Des Weiteren weist die Temperatursensorvorrichtung 100 eine zweite Temperaturmessstruktur T2 auf, die in einem zweiten Bereich B2 des Trägersubstrats 10 angeordnet ist. Der zweite Bereich B2 des Trägersubstrats 10 ist vorgegeben beabstandet von dem ersten Bereich B1. Beispielsweise repräsentiert der erste Bereich B1 einen ersten Endbereich des Trägersubstrats 10 und der zweite Bereich B2 einen zweiten Endbereich des Trägersubstrats 10.

Die erste Temperaturmessstruktur T1 ist über Zuleitungen Z mit Anschlusskontakten A verbunden. Die Anschlusskontakte A sind beispielsweise in dem zweiten Bereich B2 angeordnet. Auch die zweite Temperaturmessstruktur T2 kann über Zuleitungen Z mit Anschlusskontakten A verbunden sein. Vorzugsweise sind die Anschlusskontakte A der zweiten Temperaturmessstruktur T2 auch in dem zweiten Bereich B2 angeordnet.

Die erste T1 und die zweite Temperaturmessstruktur T2 sind beispielsweise in einer ersten Substratebene S1, z. B. auf einer ersten Oberfläche, des Trägersubstrats 10 angeordnet. Beispielsweise können die erste Temperaturmessstruktur T1 und/oder die zweite Temperaturmessstruktur T2 eine Platinlegierung aufweisen. Vorteilhafterweise können auch die jeweiligen Zuleitungen Z und die Anschlusskontakte A die Platinlegierung aufweisen.

Figur 2 zeigt ein Temperaturmessmodul 200 in einer Querschnittdarstellung. Figur 2 zeigt die Temperatursensorvorrichtung 100 ebenfalls in einer Querschnittdarstellung. Die in Figur 1 gezeigte erste Substratebenen S1 verläuft näherungsweise parallel zu der Längsasche L.

Das Temperaturmessmodul 200 weist ein Gehäuse G, die Temperatursensorvorrichtung 100, Kabel K und Kontakte auf.

Das Gehäuse G besteht beispielsweise aus einem metallischen Werkstoff oder weist zumindest einen metallischen Werkstoff auf. Das Gehäuse G ist beispielsweise derart ausgebildet, dass zwischen dem ersten Bereich B1 und dem zweiten Bereich B2 eine erste Gehäusewand GW1 und die erste Oberfläche des Trägersubstrats 10 sowie eine zweite Gehäusewand GW2 und eine zweite Oberfläche des Trägersubstrats 10 näherungsweise aneinander anliegen. Das Gehäuse G weist ein Gewinde auf. Dies ermöglicht beispielsweise eine einfache Montage der Temperatursensorvorrichtung 100, beispielsweise an ein Abgasrohr.

Des Weiteren umfasst das Temperaturmessmodul 200 eine Schutzvorrichtung U. Die Schutzvorrichtung U ist beispielsweise derart ausgebildet, dass sie den ersten Bereich B1 des Trägersubstrats 10 umhüllt. Die jeweiligen Anschlusskontakte A der ersten T1 und zweiten Temperaturmessstruktur T2 sind beispielsweise jeweils mittels Kontakten, beispielsweise mit Federkontakten, mit kunststoffisolierten Kabeln K verbunden. Die Kontakte und die Kabel K weisen beispielsweise eine Bördelverbindung auf. Die erste T1 und zweite Temperaturmessstruktur T2 sowie die zugehörige Zuleitung und Anschlusskontakte A werden beispielsweise in einem Druckvorgang auf das Trägersubstrat 10 aufgebracht. Zum Schutz der ersten T1 und zweiten Temperaturmessstruktur T2 sowie der jeweiligen Zuleitungen Z können diese beispielsweise mit einer Glas- und/oder Keramikschicht in Dickschichttechnologie abgedeckt werden. Beispielsweise kann die erste Oberfläche des Trägersubstrats 10 mit Ausnahme der Anschlusskontakte A flächig mit der Glas- und/oder Keramikschicht abgedeckt werden. Die Temperatursensorvorrichtung 100 weist vorteilhafterweise in einem Bereich, der sehr hohe Temperaturen ausgesetzt ist, keine elektrische Verbindung zwischen unterschiedlichen Bauteilen und Materialien auf.

Eine Vorrichtung zum Betreiben der Temperatursensorvorrichtung 100 kann eine Recheneinheit mit einem Programm und Datenspeicher aufweisen. Hierbei kann ein Programm zum Betreiben der Temperatursensorvorrichtung 100 in dem Programmspeicher gespeichert sein. Mittels der Recheneinheit kann das Programm ausgeführt werden. Beispielsweise wird in einem ersten Schritt des Programms mittels der ersten Temperaturmessstruktur T1 eine erste Messgröße erfasst. In einem zweiten Schritt wird abhängig von der ersten Messgröße eine erste Temperatur der Temperatursensorvorrichtung 100 ermittelt. In einem dritten Schritt wird mittels der zweiten Temperaturmessstruktur T2 eine zweite Messgröße erfasst und in einem vierten Schritt abhängig von dieser zweiten Messgröße eine zweite Temperatur der Temperatursensorvorrichtung 100 ermittelt. In einem fünften Schritt wird abhängig von der ersten und der zweiten Temperatur ein Temperaturgradient ermittelt. In einem sechsten Schritt wird abhängig von dem Temperaturgradienten und beispielsweise einer vorgegebenen Extrapolationsfunktion die Gastemperatur des Gases ermittelt. Hierbei kann eine Reihenfolge der Schritte zumindest teilweise umgekehrt werden und/oder mehrere Schritte können zeitlich parallel ablaufen. Die Vorrichtung zum Betreiben der Temperatursensorvorrichtung 100 kann Teil einer Motorsteuerung sein.

## Patentansprüche

1. Temperatursensorvorrichtung (100)zur Anordnung in einem Abgasstrang einer Brennkraftmaschine umfassend:
- ein Trägersubstrat (10), das einen ersten Bereich (B1) und einen zweiten Bereich (B2) aufweist, wobei der erste Bereich (B1) beim Betrieb der Temperatursensorvorrichtung (100) einem Gasstrom ausgesetzt ist und der zweite Bereich (B2) zu dem ersten Bereich (B1) in axialer Richtung entlang einer Längsachse (L) des Trägersubstrats (10) vorgegeben beabstandet ist,
- eine in dem ersten Bereich (B1) angeordnete erste Temperaturmessstruktur (T1),
- und eine in dem zweiten Bereich (B2) angeordnete zweite Temperaturmessstruktur (T2), wobei der erste Bereich (B1) einen ersten Endbereich des Trägersubstrats (10) repräsentiert und das Trägersubstrat (10) einen keramischen Werkstoff aufweist
**dadurch gekennzeichnet, dass** der zweite Bereich (B2) einen zweiten Endbereich des Trägersubstrats (10) repräsentiert.

2. Temperatursensorvorrichtung (100) nach Anspruch 1, bei der die erste Temperaturmessstruktur (T1) über Zuleitungen mit Anschlusskontakten (A) verbunden ist, die in dem zweiten Bereich (B2) angeordnet sind.

3. Temperatursensorvorrichtung (100) nach einem der vorstehenden Ansprüche, bei der die erste Temperaturmessstruktur (T1) und/oder die zweite Temperaturmessstruktur (T2) eine PlatinLegierung aufweisen.

4. Temperatursensorvorrichtung (100) nach einem der vorstehenden Ansprüche, bei der die erste Temperaturmessstruktur (T1) und die zweite Temperaturmessstruktur (T2) sowie die jeweiligen Zuleitungen (Z) in einer ersten Substratebene (S1) ausgebildet sind und eine metallische Legierung aufweisen.

## Claims

1. Temperature sensor device (100) for arrangement in an exhaust tract of an internal combustion engine, comprising:
- a carrier substrate (10) which has a first region (B1) and a second region (B2), wherein the first region (B1) is exposed to a gas stream during the operation of the temperature sensor device (100) and the second region (B2) is spaced apart to a predefined extent relative to the first region (B1) in an axial direction along a longitudinal axis (L) of the carrier substrate (10),
- a first temperature measurement structure (T1) arranged in the first region (B1),
- and a second temperature measurement structure (T2) arranged in the second region (B2), wherein the first region (B1) represents a first end region of the carrier substrate (10), and the carrier substrate (10) has a ceramic material,
**characterized in that** the second region (B2) represents a second end region of the carrier substrate (10).

2. Temperature sensor device (100) according to Claim 1, in which the first temperature measurement structure (T1) is connected via supply lines to connection terminals (A) which are arranged in the second region (B2).

3. Temperature sensor device (100) according to one of the preceding claims, in which the first temperature measurement structure (T1) and/or the second temperature measurement structure (T2) have/has a platinum alloy.

4. Temperature sensor device (100) according to one of the preceding claims, in which the first temperature measurement structure (T1) and the second temperature measurement structure (T2) and the respective supply lines (Z) are formed in a first substrate plane (S1) and have a metallic alloy.

## Revendications

1. Dispositif (100) de détection de la température à mettre dans une ligne de gaz d'échappement d'un moteur à combustion interne, comprenant :
- un substrat (10) support, qui au une première partie (B1) et une deuxième partie (B2), la première partie (B1) étant soumise à un courant gazeux, lorsque le dispositif (100) de détection de la température fonctionne, et la deuxième partie (B2) étant à une distance donnée à l'avance de la première partie (B1) dans la direction axiale suivant un axe (L) longitudinal du substrat (10) support,
- une première structure (T1) de mesure de la température mise dans la première partie (B1),
- et une deuxième structure (T2) de mesure de la température mise dans la deuxième partie (B2), la première partie (B1) représentant une première partie d'extrémité du substrat (10) support et le substrat (10) support comportant un matériau céramique,
**caractérisé en ce que** la deuxième partie (B2) représente une deuxième partie d'extrémité du substrat (10) support.

2. Dispositif (100) de détection de la température suivant la revendication 1, dans lequel la première structure (T1) de mesure de la température est reliée par des lignes d'arrivée à des contacts (A) de borne, qui sont mis dans la deuxième partie (B2).

3. Dispositif (100) de détection de la température suivant l'une des revendications précédentes, dans lequel la première structure (T1) de mesure de la température et/ou la deuxième structure (T2) de mesure de la température comportent un alliage en platine.

4. Dispositif (100) de détection de la température suivant l'une des revendications précédentes, dans lequel la première structure (T1) de mesure de la température et la deuxième structure (T2) de mesure de la température, ainsi que les lignes (Z) d'arrivée sont constituées dans un premier plan (S1) de substrat et comportent un alliage métallique.
